# EUROPEAN PATENT APPLICATION

(11) **EP 4 489 189 A2**
(43) Date of publication of application: **08.01.2025**
(21) Application number: 24184438.0
(22) Date of filing: 25.06.2024
(51) Int. Cl.: H01M 50/176, H01M 50/553, H01M 50/562, H01M 50/567

(54) **ELECTRICITY STORAGE DEVICE, TERMINAL FOR ELECTRICITY STORAGE DEVICE, AND METHOD FOR MANUFACTURING ELECTRICITY STORAGE DEVICE**

(30) Priority: 07.07.2023 JP 2023112283
(71) Applicant: Prime Planet Energy & Solutions, Inc., Chuo-ku Tokyo 103-0022 (JP)
(72) Inventor: YAMADA, Kohei, Tokyo, 103-0022 (JP); WAKIMOTO, Ryoichi, Tokyo, 103-0022 (JP)
(74) Representative: Kuhnen & Wacker Patent- und Rechtsanwaltsbüro PartG mbB

(57) **Abstract**

An electricity storage device includes an electrode body, a case, a terminal, and a current collecting member. The terminal includes a first conductive member and a second conductive member. The first conductive member includes a recessed portion in a first surface. The first conductive member includes a fastening portion and a metal joining portion. The second conductive member includes a flange portion and a coupling portion. A distal end of the coupling portion includes a diameter extended portion. The diameter extended portion is coupled to the current collecting member. A portion of the flange portion is arranged in the recessed portion of the first conductive member. An outer peripheral edge of the first conductive member and an outer peripheral edge of the flange portion are located in an approximately same position in a radial direction of the flange portion.

## Description

The present disclosure relates to an electricity storage device, a terminal for an electricity storage device, and a method for manufacturing an electricity storage device.

### BACKGROUND

In Japanese Laid-open Patent Publication No. 2022-049726, a terminal including a first member that is formed of metal and has a plate-like shape and a second member that is formed of metal and is ultrasonically welded to one surface of the first member is disclosed. In the first member, a recessed portion is formed in a surface at an opposite side to the surface to which the second member is welded. In the recessed portion, the first member and the second member are ultrasonically welded to each other.

### SUMMARY

The inventors of the present disclosure desire to increase reliability of a coupling portion between members in a terminal for an electricity storage device in which multiple members are coupled.

An electricity storage device disclosed herein includes an electrode body, a case that accommodates the electrode body, a terminal, and a current collecting member. The electrode body includes a first electrode and a second electrode having a different polarity from that of the first electrode. The case accommodates the electrode body. The terminal is electrically coupled to the first electrode and mounted on the case. The current collecting member is arranged in the case and electrically couples the first electrode and the terminal. The terminal incudes a first conductive member formed of a first metal and a second conductive member formed of a second metal that is different from the first metal. The first conductive member includes a recessed portion in a first surface. A portion of the second conductive member is arranged in the recessed portion. The first conductive member includes a fastening portion mechanically fastened to the second conductive member and a metal joining portion metallically joined to the second conductive member. In the first conductive member, the fastening portion is located closer to an outer periphery than the metal joining portion. The second conductive member includes a flange portion and a coupling portion formed on one surface of the flange portion. A distal end of the coupling portion includes a diameter extended portion. The diameter extended portion is coupled to the current collecting member. A portion of the flange portion is arranged in the recessed portion. An outer peripheral edge of the first conductive member and an outer peripheral edge of the flange portion are located in approximately a same position in a radial direction of the flange portion.

According to the electricity storage device described above, the coupling portion between the first conductive member and the second conductive member has high reliability.

### BRIEF DESCRIPTION OF THE DRAWINGS

FIG. 1 is a perspective view of an electricity storage device.
FIG. 2 is a schematic longitudinal sectional view taken along line II-II of FIG. 1.
FIG. 3 is a cross-sectional view illustrating a negative electrode terminal mounted on a sealing plate.
FIG. 4 is a perspective view illustrating a battery pack.
FIG. 5 is a cross-sectional view illustrating a first conductive member and a second conductive member before being fastened in a fastening step.
FIG. 6 is a cross-sectional view illustrating the first conductive member and the second conductive member after being fastened in the fastening step.
FIG. 7 is a schematic view illustrating a caulking step.
FIG. 8 is a cross-sectional view of a negative electrode terminal according to another embodiment.

### DETAILED DESCRIPTION OF THE EMBODIMENTS

Embodiments of a technology disclosed herein will be described below with reference to the accompanying drawings. As a matter of course, the embodiments described herein are not intended to be particularly limiting the present disclosure. The accompanying drawings are schematic and do not necessarily reflect actual members or portions. Members/portions that have the same effect will be denoted by the same sign as appropriate, and the overlapping description will be omitted as appropriate.

In the following description, reference signs "L," "R," "F," "Rr," "U," and "D" in the drawings respectively denote "left," "right," "front," "rear," "up," and "down," and reference signs "X," Y," and "Z" in the drawings respectively denote "a long side direction," "a short side direction," and "a height direction" of an electricity storage device. However, these directions are defined for convenience of explanation, and do not limit an installation form of the electricity storage device.

Note that, in the present specification, the term "electricity storage device" generally refers to electricity storage devices from which electric energy can be taken out. The term "electricity storage device" encompasses, as well as secondary batteries that can be repeatedly charged and discharged by moving of a charge carrier between a pair of electrodes (a positive electrode and a negative electrode) via an electrolyte, capacitors, such as an electric double layer capacitor or the like, or the like. For a method for manufacturing an electricity storage device, an embodiment in a case where a lithium-ion secondary battery is a target will be described below.

### <Electricity Storage Device 100>

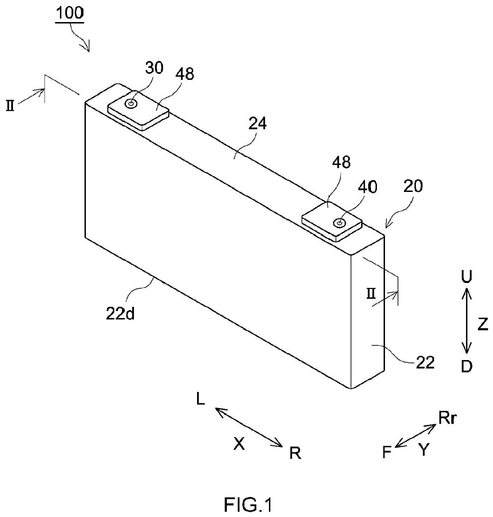

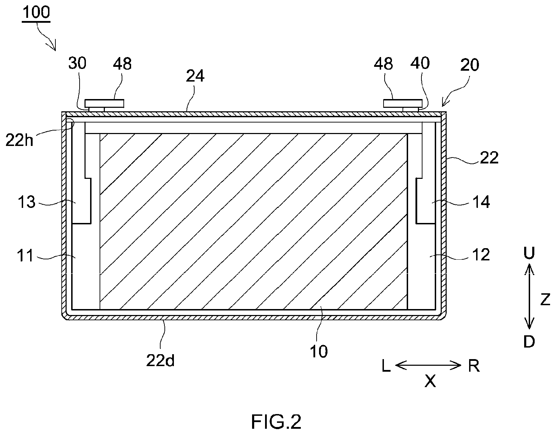

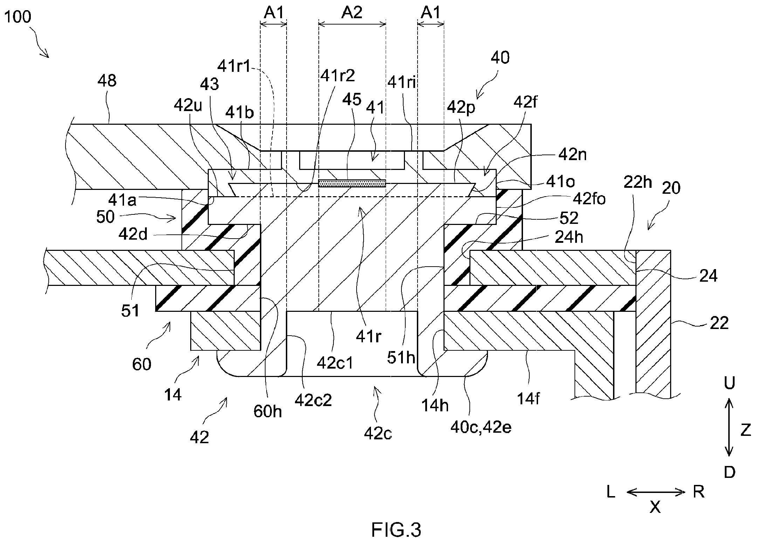

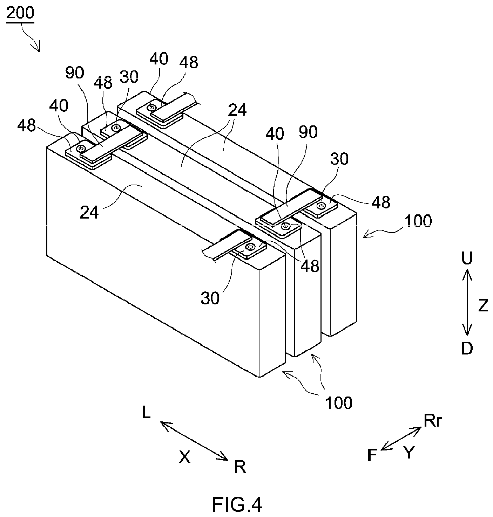

FIG. 1 is a perspective view of an electricity storage device 100. FIG. 2 is a schematic longitudinal sectional view taken along line II-II of FIG. 1. In FIG. 2, illustration of a gasket 50 and an insulator 60 is omitted. FIG. 3 is a cross-sectional view illustrating a negative electrode terminal 40 mounted on a sealing plate 24. FIG. 4 is a perspective view illustrating a battery pack 200. In FIG. 4, with the electricity storage device 100 disclosed herein assumed as a single battery, a form in which electricity storage devices 100 are coupled in series via bus bars 90 is illustrated.

As illustrated in FIG. 2, the electricity storage device 100 includes an electrode body 10, a case 20, a positive electrode terminal 30, a negative electrode terminal 40, a positive electrode current collecting member 13, and a negative electrode current collecting member 14. The electricity storage device 100 may include an external conductive member 48. The electricity storage device 100 is characterized by including the positive electrode terminal 30 and/or the negative electrode terminal 40 disclosed herein, and other components than that may be similar to those of a known device. The electricity storage device 100 is preferably a second battery, and is more preferably a nonaqueous electrolyte secondary battery. The electricity storage device 100 is herein a lithium-ion secondary battery. Although not illustrated, the electricity storage device 100 further includes an electrolyte herein. The electricity storage device 100 is configured such that the electrode body 10 and the unillustrated electrolyte are accommodated in the case 20.

The electrode body 10 may be similar to a known electrode body, and there is no particular limitation thereon. The electrode body 10 includes a positive electrode and a negative electrode (not illustrated). The electrode body 10 is, for example, a flat wound electrode body obtained by stacking a band-like positive electrode and a band-like negative electrode with a band-like separator interposed therebetween such that the positive electrode and the negative electrode are insulated from each other and winding an obtained stacked body with a winding axis as a center. However, in another embodiment, the electrode body 10 may be a stacked electrode body in which a quadrangular (typically rectangular) positive electrode and a quadrangular (typically rectangular) negative electrode are stacked so as to be insulated from each other. One of the positive electrode and the negative electrode is an example of a "first electrode" and the other one of the positive electrode and the negative electrode is an example of a "second electrode.

The positive electrode includes a positive electrode current collector 11 and a positive electrode mixture layer (not illustrated) fixed on the positive electrode current collector 11. The positive electrode current collector 11 is formed of a conductive metal, such as, for example, aluminum, an aluminum alloy, nickel, stainless steel, or the like. The positive electrode mixture layer includes a positive electrode active material (for example, lithium-transition metal compound oxide). The negative electrode includes a negative electrode current collector 12 and a negative electrode mixture layer (not illustrated) fixed on the negative electrode current collector 12. The negative electrode current collector is formed of a conductive metal, such as, for example, copper, a copper alloy, nickel, stainless steel, or the like. The negative electrode mixture layer includes a negative electrode active material (for example, a carbon material, such as graphite or the like).

As indicated by hatched lines in FIG. 2, a stacking portion where the positive electrode mixture layer and the negative electrode mixture layer are stacked so as to be insulated from each other is formed in a central portion of the electrode body 10 in a long side direction X. On the other hand, a portion (positive electrode current collector exposed portion) of the positive electrode current collector 11 where the positive electrode mixture layer is not formed protrudes from the stacking portion in a left end portion of the electrode body 10 in the long side direction X. The positive electrode current collecting member 13 is attached to the positive electrode current collector exposed portion. The positive electrode current collecting member 13 may be formed of the same metal material as that of the positive electrode current collector 11, that is, a conductive metal, such as, for example, aluminum, an aluminum alloy, nickel, stainless steel, or the like. The positive electrode current collecting member 13 is arranged in the case 20. The positive electrode current collecting member 13 electrically couples the positive electrode and the positive electrode terminal 30.

A portion (negative electrode current collector exposed portion) of the negative electrode current collector 12 where the negative electrode mixture layer is not formed protrudes from the stacking portion in a right end portion of the electrode body 10 in the long side direction X. The negative electrode current collecting member 14 is attached to the negative electrode current collector exposed portion. A material (type of metal) of the negative electrode current collecting member 14 may be different from that of the positive electrode current collecting member 13. The negative electrode current collecting member 14 may be formed of the same type of metal as that of the negative electrode current collector 12, that is, a conductive metal, such as, for example, copper, a copper alloy, nickel, stainless steel, or the like. The negative electrode current collecting member 14 is arranged in the case 20. The negative electrode current collecting member 14 electrically couples the negative electrode and the negative electrode terminal 40. The negative electrode current collecting member 14 electrically couples the negative electrode and the negative electrode terminal 40 in the case 20.

The electrolyte may be similar to an electrolyte conventionally used, and there is no particular limitation thereon. The electrolyte is, for example, a nonaqueous liquid electrolyte (nonaqueous electrolyte solution) containing a nonaqueous solvent and a supporting salt. Examples of the nonaqueous solvent include carbonates, such as, for example, ethylene carbonate, dimethyl carbonate, ethyl methyl carbonate, or the like. The supporting salt is, for example, a fluorine-containing lithium salt, such as LiPF₆ or the like. However, the electrolyte may be in a solid form (solid electrolyte) and may be integrated with the electrode body 10.

The case 20 is a housing that accommodates the electrode body 10. The case 20 is formed in a flat and bottomed rectangular parallelopiped (rectangular) shape. However, a shape of the case 20 is not limited to a rectangular shape and may be an arbitrary shape, such as a cylindrical shape or the like. A material of the case 20 may be the same as a material conventionally used, but not limited to. The case 20 is formed of a metal material, such as, for example, aluminum, an aluminum alloy, stainless steel, or the like, having a light weight and an excellent heat conductivity. The case 20 includes an exterior body 22 including an opening 22h and a sealing plate 24 that closes the opening 22h. The case 20 preferably includes the exterior body 22 and the sealing plate 24. The case 20 is formed such that the exterior body 22 and the sealing plate 24 are integrated by joining (for example, welding joining) the sealing plate 24 to a peripheral edge of the opening 22h of the exterior body 22. The case 20 is airtightly sealed (hemetically sealed).

The exterior body 22 includes a bottom surface 22d. The sealing plate 24 is opposed to the bottom surface 22d of the exterior body 22. The sealing plate 24 is mounted on the exterior body 22 so as to close the opening 22h of the exterior body 22. The sealing plate 24 has an approximately rectangular shape herein. Note that, as used in the present specification, the term "approximately rectangular" encompasses, in addition to a complete rectangular shape (rectangle), for example, a shape in which corners that connect long sides and short sides of rectangular surfaces are rounded, a shape in which corner portions have notches, or the like.

The positive electrode terminal 30 and the negative electrode terminal 40 protrude outward from the case 20. The positive electrode terminal 30 and the negative electrode terminal 40 protrude from the same surface of the case 20 (specifically, the sealing plate 24) herein. However, the positive electrode terminal 30 and the negative electrode terminal 40 may be configured to protrude from different surfaces of the case 20. Each of the positive electrode terminal 30 and the negative electrode terminal 40 is arranged in a corresponding one of both end portions of the sealing plate 24 in the long side direction X. The positive electrode terminal 30 and/or the negative electrode terminal 40 is one example of "a terminal for an electricity storage device."

As illustrated in FIG. 2, the positive electrode terminal 30 is electrically coupled to the positive electrode of the electrode body 10 via the positive electrode current collecting member 13 in the case 20. The negative electrode terminal 40 is electrically coupled to the negative electrode of the electrode body 10 via the negative electrode current collecting member 14 in the case 20. Each of the positive electrode terminal 30 and the negative electrode terminal 40 is mounted to the case 20 (specifically, the sealing plate 24). The positive electrode terminal 30 and the negative electrode terminal 40 are preferably fixed to the case 20 (specifically, the sealing plate 24). Each of the positive electrode terminal 30 and the negative electrode terminal 40 is insulated from the sealing plate 24 via a corresponding one of the gasket 50 (see FIG. 3) and the insulator 60 (see FIG. 3).

Configurations of the positive electrode terminal 30 and the negative electrode terminal 40 of the electricity storage device 100 will be described in detail below using a terminal structure at a negative electrode terminal 40 side as an example. The terminal structure described below is preferably provided at the negative electrode terminal 40 side. Note that the terminal structure described below may be provided at a positive electrode terminal 30 side, and may be provided at each of both of the positive electrode terminal 30 side and the negative electrode terminal 40 side. In that case, in the following description, the "negative electrode" may be read as the "positive electrode," as appropriate.

As illustrated in FIG. 3, a terminal mounting hole 24h is formed in the sealing plate 24 so as to pass through in an up-down direction Z. The terminal mounting hole 24h is provided in the case 20 (in this embodiment, the sealing plate 24). The negative electrode terminal 40 is preferably inserted in the terminal mounting hole 24h. Although not illustrated, the terminal mounting hole 24h has a circular shape (for example, a complete circular shape) when viewed from top herein. The terminal mounting hole 24h has an inner diameter that is large enough to allow insertion of a coupling portion 42c of the negative electrode terminal 40 before caulking, which will be described later, therethrough. The terminal mounting hole 24h is formed to be smaller than a flange portion 42f of the negative electrode terminal 40, which will be described later.

The negative electrode current collecting member 14 is attached to the negative electrode current collector exposed portion of the negative electrode current collector 12 and forms a conduction path that electrically couples the negative electrode and the negative electrode terminal 40. The negative electrode current collecting member 14 includes a flat plate-like portion 14f that horizontally extends along an inner surface of the sealing plate 24. In the flat plate-like portion 14f, an opening 14h is provided in a position corresponding to the terminal mounting hole 24h. The opening 14h has an inner diameter that is large enough to allow insertion of the coupling portion 42c of the negative electrode terminal 40 before the caulking, which will be described later, therethrough. The negative electrode current collecting member 14 is fixed to the sealing plate 24 with the negative electrode terminal 40 by caulking. A resin insulating member is preferably arranged between the case 20 (in this embodiment, sealing plate 24) and the negative electrode current collecting member 14. In this embodiment, the negative electrode current collecting member 14 is fixed to the sealing plate 24 with the negative electrode terminal 40 so as to be insulated from the sealing plate 24 via the insulator 60. The negative electrode current collecting member 14 is an example of a "current collecting member."

The gasket 50 is an insulating member arranged between an upper surface (outer surface) of the sealing plate 24 and the negative electrode terminal 40. An insulating member (for example, the gasket 50) is preferably arranged between the case 20 (for example, the sealing plate 24) and the negative electrode terminal 40. The gasket 50 has a function of insulating the sealing plate 24 and the negative electrode terminal 40 from each other and closing the terminal mounting hole 24h. The gasket 50 is formed of a resin material that has an electrical insulation property and is elastically deformable, that is, for example, fluororesin, such as perfluoroalkoxy fluororesin (PFA) or the like, polyphenylene sulfide resin (PPS), aliphatic polyamide, or the like.

The gasket 50 includes a cylindrical portion 51 and a base 52. The cylindrical portion 51 prevents direct contact of the sealing plate 24 with the coupling portion 42c of the negative electrode terminal 40. The cylindrical portion 51 has a hallow cylindrical shape. The cylindrical portion 51 includes a hole portion 51h that passes through in the up-down direction Z. The hole portion 51h is formed such that the coupling portion 42c of the negative electrode terminal 40 before caulking can be inserted therethrough. The cylindrical portion 51 is inserted through the terminal mounting hole 24h of the sealing plate 24. The base 52 prevents direct contact of the sealing plate 24 with the flange portion 42f of the negative electrode terminal 40, which will be described later. The base 52 is connected to an upper end of the cylindrical portion 51. The base 52 horizontally extends from the upper end of the cylindrical portion 51. The base 52 is formed, for example, in an annular shape so as to surround the terminal mounting hole 24h of the sealing plate 24. The base 52 extends along the upper surface of the sealing plate 24. The base 52 is sandwiched between a lower surface 42d of the flange portion 42f of the negative electrode terminal 40 and the upper surface of the sealing plate 24 and is compressed in the up-down direction Z by caulking.

The insulator 60 is an insulating member arranged between a lower surface (inner surface) of the sealing plate 24 and the negative electrode current collecting member 14. An insulating member (for example, the insulator 60) is preferably arranged between the case 20 (for example, the sealing plate 24) and the negative electrode current collecting member 14. The insulator 60 includes a flat plate-like portion that horizontally extends along the inner surface of the sealing plate 24. A hole portion 60h is formed in a position corresponding to the terminal mounting hole 24h in the flat plate-like portion. The hole portion 60h has an inner diameter that is large enough to allow insertion of the coupling portion 42c of the negative electrode terminal 40 therethrough. The insulator 60 is formed of a resin material that has resistance against an electrolyte that is used, has an electrical insulation property, and is elastically deformable, that is, for example, fluororesin, such as perfluoroalkoxy fluororesin (PFA) or the like, polyphenylene sulfide resin (PPS), or the like. The flat plate-like portion of the insulator 60 is sandwiched between the lower surface of the sealing plate 24 and the upper surface of the negative electrode current collecting member 14 and is compressed in the up-down direction Z by caulking.

### <Negative Electrode Terminal 40>

The negative electrode terminal 40 includes a first conductive member 41 and a second conductive member 42. As illustrated in FIG. 3, the negative electrode terminal 40 is inserted through the terminal mounting hole 24h and extends from inside of the case 20 to outside. The negative electrode terminal 40 may further include the external conductive member 48 coupled to the first conductive member 41 outside the case 20.

As will be described later, the negative electrode terminal 40 is configured such that two types of conductive members, that is, the first conductive member 41 and the second conductive member 42, are integrated by a fastening portion 43 and a metal joining portion 45. The first conductive member 41 and the second conductive member 42 are electrically coupled to each other via the fastening portion 43 and the metal joining portion 45.

The negative electrode terminal 40 is inserted in the terminal mounting hole 24h of the sealing plate 24 and the opening 14h of the negative electrode current collecting member 14 and has a distal end portion (a cylindrical portion 42c2 that will be described later) in an insertion direction caulked on the negative electrode current collecting member 14. Specifically, the distal end portion is caulked on a peripheral edge portion of the negative electrode current collecting member 14 around the opening 14h. A caulking portion 40c is formed in a lower end portion of the negative electrode terminal 40. The negative electrode terminal 40 is fixed to the sealing plate 24 by caulking and is electrically coupled to the negative electrode current collecting member 14. The caulking portion 40c has a cylindrical shape herein. However, a shape of the caulking portion 40c is not limited to a cylindrical shape, and may be an arbitrary shape, such as a columnar shape or the like. Note that the caulking portion 40c is preferably welded to the negative electrode current collecting member 14. The first conductive member 41 and the second conductive member 42 that form the negative electrode terminal 40 will be described below.

### <First Conductive Member 41>

The first conductive member 41 is arranged outside the case 20. The first conductive member 41 is formed of a first metal. The first metal is a conductive metal, such as, for example, aluminum, an aluminum alloy, nickel, stainless steel, or the like. The first metal is preferably aluminum or an aluminum alloy. The first conductive member 41 is formed of aluminum herein. The first conductive member 41 is preferably formed of a (soft) metal having a lower Vickers' hardness than that of the second conductive member 42. The first conductive member 41 may be formed of an alloy containing, as a first component (component contained at a highest blending ratio by weight, the same applies below), the same metal or the same metal element as that of the positive electrode current collecting member 13.

In this embodiment, the first conductive member 41 has a plate-like shape (specifically, flat plate-like shape). The first conductive member 41 has an approximately circular shape when viewed from top. The first conductive member 41 includes a first surface 41a and a second surface 41b. The first surface 41a is joined to the second conductive member 42. The second surface 41b is a surface at an opposite side to the first surface 41a. In this embodiment, the external conductive member 48 is mounted on the second surface 41b. The external conductive member 48 preferably extends in a longitudinal direction of the sealing plate 24. The external conductive member 48 is preferably formed of the same type of metal as that of the first conductive member 41 (in this embodiment, aluminum or an aluminum alloy). The external conductive member 48 may not be necessarily mounted on the second surface 41b. For example, an external conductive member, such as a bus bar 90 (see FIG. 4) or the like, may be coupled to the second surface 41b. In forming the battery pack 200 (see FIG. 4), the bus bar 90 may be directly coupled to the second surface 41b.

The first conductive member 41 includes a recessed portion 41r in the first surface 41a. The recessed portion 41r is provided in an approximately central portion of the first conductive member 41 when viewed from top. The recessed portion 41r is formed such that a diameter of the recessed portion 41r increases as proceeding toward a bottom 41r2 from an opening 41r1. A side surface of the recessed portion 41r is tapered such that the diameter of the recessed portion 41r gradually increases as proceeding in a depth direction. A portion of the second conductive member 42 is arranged in the recessed portion 41r. The recessed portion 41r includes the fastening portion 43 mechanically fastened to the second conductive member 42 and the metal joining portion 45 is metallically joined to the second conductive member 42.

### <Second Conductive Member 42>

The second conductive member 42 is inserted through the terminal mounting hole 24h and extends from the inside of the case 20 to outside. The second conductive member 42 is formed of a second metal that is different from the first metal. The second metal is a conductive metal, such as, for example, copper, a copper alloy, nickel, stainless steel, or the like. The second metal is preferably formed of copper or a copper alloy. The second conductive member 42 is formed of copper herein. The second conductive member 42 is preferably formed of a (hard) metal having a higher Vickers' hardness than that of the first conductive member 41. The second metal may be formed of an alloy containing, as a first component, the same metal or the same metal element as that of the negative electrode current collecting member 14. The second conductive member 42 may be configured such that a portion or an entire portion of a surface of the second conductive member 42 is coated with some other metal by Ni plating, tin plating, or the like.

The second conductive member 42 includes the flange portion 42f and the coupling portion 42c. The flange portion 42f is a portion of the second conductive member 42 that has a larger diameter than that of the other portion thereof in a surface direction (in an X direction and a Y direction). The flange portion 42f is arranged outside the case 20. The flange portion 42f is coupled to the first conductive member 41. The coupling portion 42c is inserted through the terminal mounting hole 24h of the case 20 (in this embodiment, the sealing plate 24) and the opening 14h of the negative electrode current collecting member 14. The base 52 of the gasket 50 is arranged between the flange portion 42f and the sealing plate 24. The cylindrical portion 51 of the gasket 50 is arranged between the coupling portion 42c and the sealing plate 24.

The flange portion 42f has an outside diameter shape corresponding to a planar shape of the first conductive member 41. An outer peripheral edge 41o of the first conductive member 41 and an outer peripheral edge 42fo of the flange portion 42f are in the approximately same position in a radial direction of the flange portion 42f. For example, a dimension by which one of the outer peripheral edge 41o of the first conductive member 41 and the outer peripheral edge 42fo of the flange portion 42f protrudes relative to the other one of the outer peripheral edge 41o and the outer peripheral edge 42fo in a radial direction of the flange portion 42f may be 2 mm or less. The smaller the dimension by which one of the outer peripheral edge 41o of the first conductive member 41 and the outer peripheral edge 42fo of the flange portion 42f protrudes relative to the other one of the outer peripheral edge 41o and the outer peripheral edge 42fo is, the more preferable the dimension is, and the dimension by which one protrudes relative to the other is more preferably 1 mm or less, and is even more preferably 0.5 mm or less. In this embodiment, the flange portion 42f has an approximately disk-like shape having the approximately same dimension as that of the first surface 41a of the first conductive member 41. In a case where the outer peripheral edge 41o of the first conductive member 41 and the outer peripheral edge 42fo of the flange portion 42f are in the approximately same position in the radial direction of the flange portion 42f, a boundary between the outer peripheral edge 41o of the first conductive member 41 and the outer peripheral edge 42fo of the flange portion 42f can be recognized to extend in a circumferential direction, when the negative electrode terminal 40 is viewed from the radial direction of the flange portion 42f.

The flange portion 42f includes a protruding portion 42p and a narrow portion 42n. The protruding portion 42p is formed on an upper surface 42u of the flange portion 42f. The protruding portion 42p has a shape corresponding to the recessed portion 41r. The protruding portion 42p has a diameter that increases as proceeding toward a distal end side (a side distant from the flange portion 42f). The diameter of the protruding portion 42p reduces as proceeding from a distal end toward a base end thereof. The narrow portion 42n is a portion of the protruding portion 42p where a portion of a side surface of the protruding portion 42p is constricted. In other words, the narrow portion 42n is a portion of the protruding portion 42p that has a smaller diameter than that of the other portion and is recessed. In this embodiment, the narrow portion 42n is formed at the base end of the protruding portion 42p.

A portion of the flange portion 42f (in this embodiment, the protruding portion 42p) is arranged in the recessed portion 41r of the first conductive member 41. The first conductive member 41 is coupled to the second conductive member 42 via the fastening portion 43 mechanically fastened. There is no particular limitation on a form of the fastening portion 43 as long as the fastening portion 43 is mechanically fastened, for example, by mechanical energy. The fastening portion 43 can be a portion fastened, for example, by press fitting, shrink fitting, caulking, riveting, folding, bolt joining, or the like.

The fastening portion 43 is preferably configured such that a recessed portion is provided in an outer peripheral side wall of the flange portion 42f of the second conductive member 42 and a portion of the first conductive member 41 is arranged in the recessed portion. In this embodiment, the narrow portion 42n is provided as the recessed portion in the outer peripheral side wall of the flange portion 42f of the second conductive member 42. The fastening portion 43 is realized by the recessed portion 41r of the first conductive member 41 and the protruding portion 42p and the narrow portion 42n of the second conductive member 42. A portion of an inner wall of the recessed portion 41r of the first conductive member 41 enters the narrow portion 42n of the second conductive member 42. Thus, the inner wall of the recessed portion 41r of the first conductive member 41 is fixed (for example, pressed and fixed) by the narrow portion 42n of the second conductive member 42. As described above, the protruding portion 42p fits into the recessed portion 41r. As a result, the first conductive member 41 and the second conductive member 42 are mechanically fastened to each other. The first conductive member 41 and the second conductive member 42 are joined to each other via the metal joining portion 45. The metal joining portion 45 is located at an inner periphery side of the fastening portion 43.

The metal joining portion 45 is a portion where the first conductive member 41 and the second conductive member 42 are metallically joined to each other. As used herein, the term "metal joining" refers to a portion where metal members are joined to each other by metallurgical joining and excludes joining by mechanical fastening. The metal joining portion 45 can be formed, for example, by ultrasonic joining, diffusion joining, laser welding, or the like. From a viewpoint of suppressing formation of a brittle intermetallic compound at a joining interface, the metal joining portion 45 is preferably an ultrasonic joining portion formed by ultrasonic joining. In this embodiment, the metal joining portion 45 is an ultrasonic joining portion where the first conductive member 41 and the second conductive member 42 are joined to each other by ultrasonic joining.

Note that there is no particular limitation on a position of the metal joining portion 45, as long as the metal joining portion 45 is located at the inner periphery side of the fastening portion 43. The first conductive member 41 includes a first area A1 and a second area A2. The first area A1 overlaps a diameter extended portion 42e when viewed in a direction in which the coupling portion 42c of the second conductive member 42 extends, as will be described later. The second area A2 is located more inside than the first area A1. Some other area, such as an area where a rib 41ri that will be described later or the like is formed, may be provided between the first area A1 and the second area A2. Note that, in this embodiment, a direction in which the coupling portion 42c extends corresponds to a thickness direction of a portion (the sealing plate 24) in which the terminal mounting hole 24h to which the negative electrode terminal 40 is mounted is provided in the case 20.

In this embodiment, the opening 41r1 of the recessed portion 41r is formed such that an edge of the opening 41r1 is located more outside than the first area A1. Therefore, the first area A1 and the second area A2 are located more inside than an area where the recessed portion 41r is formed in a plan view viewed in the direction in which the coupling portion 42c extends. The metal joining portion 45 is formed in the second area A2. An upper surface of the first area A1 and an upper surface of the second area A2 are preferably approximately on the same plane. For example, a difference in height between the upper surface of the first area A1 and the upper surface of the second area A2 is preferably 2 mm or less, is more preferably 1mm or less, and is even more preferably 0.5 mm or less.

In the first conductive member 41, the fastening portion 43 is located closer to an outer periphery than the metal joining portion 45. In other words, the fastening portion 43 is located more outside than the metal joining portion 45 in the surface direction (in the X direction and the Y direction) of the first conductive member 41. In this embodiment, the metal joining portion 45 is formed in an approximately central portion of the bottom 41r2 of the recessed portion 41r of the first conductive member 41. The metal joining portion 45 is formed in an approximately central portion of the interface between the first conductive member 41 and the second conductive member 42, so that a load generated by vibration of the electricity storage device 100, the bus bar 90 (see FIG. 4), or the like is less likely to be applied to the metal joining portion 45.

The second conductive member 42 includes the coupling portion 42c coupled to the negative electrode current collecting member 14. The coupling portion 42c is formed on one surface of the flange portion 42f (in this embodiment, the lower surface 42d). The coupling portion 42c is provided on the surface at an opposite side to a surface on which the protruding portion 42p is formed. A distal end of the coupling portion 42c includes the diameter extended portion 42e. The diameter extended portion 42e is configured such that a diameter of the diameter extended portion 42e increases as processing toward the distal end of the coupling portion 42c. The diameter extended portion 42e is coupled to the negative electrode current collecting member 14. The diameter extended portion 42e is also referred to as the caulking portion 40c, and is caulked and coupled to the negative electrode current collecting member 14. From a viewpoint of increasing a conductivity, respective portions of the diameter extended portion 42e and the negative electrode current collecting member 14 are preferably joined to each other by laser welding or the like.

In this embodiment, the coupling portion 42c includes a solid portion 42c1 and a cylindrical portion 42c2. The coupling portion 42c is a portion that forms the caulking portion 40c of the negative electrode terminal 40 descried above. The solid portion 42c1 is a portion that extends from the lower surface 42d of the flange portion 42f and has an approximately columnar shape. The solid portion 42c 1 extends approximately from a central portion of the lower surface 42d of the flange portion 42f. The solid portion 42c1 extends toward the distal end of the coupling portion 42c. The cylindrical portion 42c2 is a portion that extends from the solid portion 42c 1 toward the distal end and has an approximately cylindrical shape before being coupled to the negative electrode current collecting member 14. When being coupled to the negative electrode current collecting member 14, the diameter of the cylindrical portion 42c2 is extended, and a portion of the cylindrical portion 42c2 is caulked as the diameter extended portion 42e on the negative electrode current collecting member 14 and is coupled to the negative electrode current collecting member 14.

Note that there is no particular limitation on a configuration of the coupling portion 42c. From a viewpoint of facilitating expansion of the diameter when being coupled to the negative electrode current collecting member 14, the coupling portion 42c preferably includes the cylindrical portion 42c2 at the distal end side (the side distance from the flange portion 42f). In the coupling portion 42c, the solid portion 42c1 may not be provided and the cylindrical portion 42c2 may extend from the flange portion 42f. However, in terms of strength of the coupling portion 42c, the solid portion 42c1 extending from the flange portion 42f is preferably provided in the coupling portion 42c. For example, the solid portion 42c1 can be set to have a dimension corresponding to the thickness of the sealing plate 24.

In the negative electrode terminal 40 described above, a portion of the interface between the first conductive member 41 and the second conductive member 42 is metallically joined by the metal joining portion 45. Thus, an electric resistance between the first conductive member 41 and the second conductive member 42 is reduced. As a result, an excellent conductivity between the first conductive member 41 and the second conductive member 42 is achieved. The first conductive member 41 and the second conductive member 42 are mechanically fastened to each other by the fastening portion 43 located closer to the outer periphery than the metal joining portion 45. Thus, the first conductive member 41 and the second conductive member 42 are firmly coupled to each other. As a result, the metal joining portion 45 can be easily maintained and an excellent conductivity between the first conductive member 41 and the second conductive member 42 is likely to be maintained.

In the negative electrode terminal 40 described above, the outer peripheral edge 41o of the first conductive member 41 and the outer peripheral edge 42fo of the flange portion 42f are in the approximately same position in the radial direction of the flange portion 42f. In the negative electrode terminal 40 having the configuration described above, when viewed from top, a dimension of the second conductive member 42 can be set about the same as a dimension of the first conductive member 41, and a diameter of the fastening portion 43 provided to extend in the circumferential direction of the flange portion 42f can be increased. As the diameter of the fastening portion 43 increases, joining strength in the fastening portion 43 is increased. As a result, the metal joining portion 45 can be easily maintained and an excellent conductivity between the first conductive member 41 and the second conductive member 42 is more likely to be maintained. A ratio at which the second conductive member 42 occupies in the negative electrode terminal 40 increases, so that conductivity of the first conductive member 41 and the second conductive member 42 can be increased. As a result, heat generation by electric conduction is suppressed, and durability of the electricity storage device 100 can be increased.

### <Method for Manufacturing Negative Electrode Terminal 40>

The negative electrode terminal 40 described above can be manufactured, for example, by a method for manufacturing a terminal (in this embodiment, the negative electrode terminal 40) for an electricity storage device that will be described below. A method for manufacturing a terminal for an electricity storage device includes a preparation step of preparing the first conductive member 41 and the second conductive member 42, a fastening step of fastening the first conductive member 41 and the second conductive member 42, and a metal joining step of metallically joining the first conductive member 41 and the second conductive member 42. The method for manufacturing a terminal for an electricity storage device may include some other step.

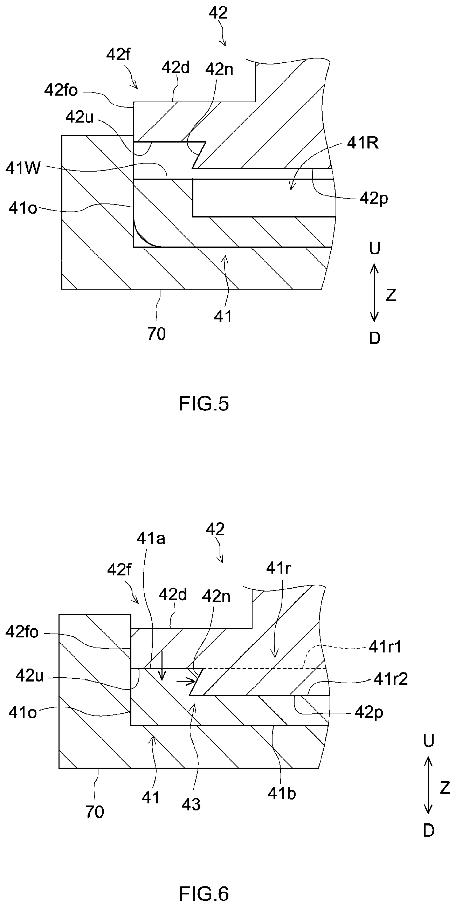

FIG. 5 is a cross-sectional view illustrating the first conductive member 41 and the second conductive member 42 before being fastened in the fastening step. FIG. 6 is a cross-sectional view illustrating the first conductive member 41 and the second conductive member 42 after being fastened in the fastening step. In FIG. 6, the shape of the first conductive member 41 before being plastically deformed is indicated by a broken line. In FIG. 6, a direction in which the first conductive member 41 is plastically deformed is indicted by an arrow.

In the preparation step, the first conductive member 41 and the second conductive member 42 are prepared. As the second conductive member 42, the second metal having the shape described above is prepared. In this embodiment, as the first conductive member 41, a metal having a lower hardness than that of the second conductive member 42 is used. As the first conductive member 41, the metal formed in a shape that is deformed along the protruding portion 42p and the narrow portion 42n of the second conductive member 42 when being caulked in the fastening step is prepared. In this embodiment, the first conductive member 41 in which a recessed portion 41R and a wall portion 41W are provided is prepared (see FIG. 5). After the second conductive member 42 is put in the recessed portion 41R, the recessed portion 41R serves as the recessed portion 41r.

Herein, the outer peripheral edge 41o of the first conductive member 41 and the outer peripheral edge 42fo of the flange portion 42f preferably have the approximately same shape. The outer peripheral edge 41o of the first conductive member 41 and the outer peripheral edge 42fo of the flange portion 42f preferably have the approximately same dimension. For example, a difference in dimension between the outer peripheral edge 41o of the first conductive member 41 and the outer peripheral edge 42fo of the flange portion 42f may be 2 mm or less, is preferably 1 mm or less, is more preferably 5 mm or less, and is even more preferably 0 mm.

There is no particular limitation on an inner diameter of the recessed portion 41R, as long as the inner diameter of the recessed portion 41R is a dimension that allows insertion of the protruding portion 42p of the second conductive member 42. In this embodiment, the inner diameter of the recessed portion 41R is the approximately same dimension as that of the protruding portion 42p of the second conductive member 42. The wall portion 41W is pressed by the upper surface 42u of the flange portion 42f when the protruding portion 42p of the second conductive member 42 is inserted in the recessed portion 41R of the first conductive member 41. A height of the wall portion 41W (depth of the recessed portion 41R) is set to a dimension larger than a height of the protruding portion 42p.

In the fastening step, the first conductive member 41 and the second conductive member 42 are mechanically fastened to each other. In this embodiment, the first conductive member 41 and the second conductive member 42 are mechanically fastened to each other by caulking the first conductive member 41 to the second conductive member 42. As illustrated in FIG. 5, the first conductive member 41 before being fastened to the second conductive member 42 includes the recessed portion 41R in which the protruding portion 42p of the second conductive member 42 is arranged. The recessed portion 41R is a portion recessed in an approximately columnar shape in the depth direction.

In the fastening step, first, the first conductive member 41 is arranged in a mold 70. A dimension of an inner peripheral surface of the mold 70 corresponds to respective dimensions of the outer peripheral edge 41o of the first conductive member 41 and the outer peripheral edge 42fo of the flange portion 42f. From a viewpoint of suppressing unnecessary deformation of the first conductive member 41, the mold 70 preferably has a shape that surrounds the entire outer peripheral edge 41o of the first conductive member 41.

Next, the second conductive member 42 is fastened to the first conductive member 41 arranged in the mold 70. In this embodiment, the second conductive member 42 is pressed against the first conductive member 41 such that the protruding portion 42p of the second conductive member 42 is inserted in the recessed portion 41R of the first conductive member 41. At this time, a known press device (not illustrated) or the like can be used. In pressing, with the wall portion 41W located higher than protruding portion 42p, the wall portion 41W of the first conductive member 41 is pressed by the upper surface 42u of the flange portion 42f of the second conductive member 42. At this time, since the first conductive member 41 has a lower hardness than that of the second conductive member 42, the first conductive member 41 is crushed and is plastically deformed.

As illustrated in FIG. 5 and FIG. 6, the wall portion 41W of the first conductive member 41 is plastically deformed toward the narrow portion 42n of the second conductive member 42. Thus, a portion of the first conductive member 41 flows to the narrow portion 42n of the second conductive member 42. As a result, as illustrated in FIG. 6, an edge of the recessed portion 41r of the first conductive member 41 is press-fit to the narrow portion 42n of the second conductive member 42, so that the first conductive member 41 and the second conductive member 42 are fastened to each other. In the fastening step, as described above, various fastening methods in which the first conductive member 41 and the second conductive member 42 are metallically fastened to each other may be employed.

When the first conductive member 41 and the second conductive member 42 are fastened to each other and the fastening portion 43 is formed, the first conductive member 41 and the second conductive member 42 are metallically joined to each other next.

In the metal joining step, the metal joining portion 45 is formed at the interface between the first conductive member 41 and the second conductive member 42 on the inner periphery side from the fastening portion 43. In this embodiment, the first conductive member 41 and the second conductive member 42 are metallically joined to each other by the ultrasonic joining portion. Although not illustrated in detail, in the metal joining step, the first conductive member 41 and the second conductive member 42 fastened to each other are sandwiched between a horn and an anvil and ultrasonic vibration is given to the joining interface via the horn. For example, the anvil may be inserted in the cylindrical portion 42c2 of the second conductive member 42 and ultrasonic vibration may be given to the first conductive member 41 while the horn is pressed to an approximately central portion of the second surface 41b of the first conductive member 41. As a result, the metal joining portion 45 (see FIG. 3) is formed in an approximately central portion of an interface between the recessed portion 41r of the first conductive member 41 and the protruding portion 42p of the second conductive member 42. Note that, in the metal joining step, as described above, various joining methods in which the first conductive member 41 and the second conductive member 42 are joined to each other by metallurgical joining may be employed.

### <Method for Manufacturing Electricity Storage Device 100>

The electricity storage device 100 can be manufactured using a terminal (in this embodiment, negative electrode terminal 40) manufactured by the method for manufacturing a terminal for an electricity storage device described above. A method for manufacturing the electricity storage device 100 may include an insertion step and a caulking step. The method for manufacturing the electricity storage device 100 may include a preparation step of preparing a terminal for an electricity storage device.

First, the negative electrode terminal 40 can be prepared by the method for manufacturing a terminal for an electricity storage device described above. The electrode body 10 and the exterior body 22 and the sealing plate 24 of the case 20 can be prepared. The electrode body 10 can be mounted on the sealing plate 24 via the negative electrode current collecting member 14 and the positive electrode current collecting member 13 by a known method.

As illustrated in FIG. 3, in the insertion step, the coupling portion 42c of the second conductive member 42 is inserted through the opening 14h of the negative electrode current collecting member 14. In the insertion step, the negative electrode terminal 40 is inserted through the terminal mounting hole 24h of the case 20 (in this embodiment, the sealing plate 24). At this time, the gasket 50 and the insulator 60 are arranged on the sealing plate 24.

In the insertion step, in a state where respective positions of the cylindrical portion 51 of the gasket 50, the opening 14h of the negative electrode current collecting member 14, the terminal mounting hole 24h of the sealing plate 24, and the hole portion 60h of the insulator 60 are aligned, the coupling portion 42c of the second conductive member 42 is inserted through the opening 14h and the terminal mounting hole 24h. Thus, the coupling portion 42c of the negative electrode terminal 40 protrudes from the sealing plate 24 at the surface on which the flange portion 42f is arranged and the surface at an opposite side thereto. In this embodiment, the solid portion 42c1 of the coupling portion 42c is inserted through the terminal mounting hole 24h of the sealing plate 24. At least a portion of the cylindrical portion 42c2 of the coupling portion 42c protrudes from the opening 14h of the negative electrode current collecting member 14. In a similar manner, the positive electrode terminal 30 is inserted through an opening of the sealing plate 24.

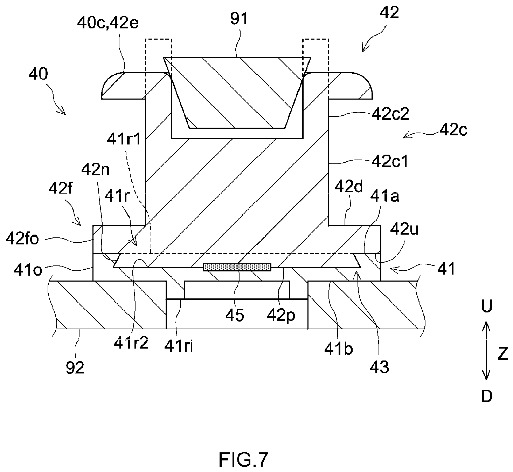

After the insertion step, the caulking step is performed. FIG. 7 is a schematic view illustrating the caulking step. In FIG. 7, a cross section of the negative electrode terminal 40 is schematically illustrated. In FIG. 7, the coupling portion 42c before being deformed by a punch 91 is indicated by a broken line, and the coupling portion 42c after being deformed by the punch 91 is indicated by a solid line. In FIG. 7, illustration of the sealing plate 24, the gasket 50, the insulator 60, and the negative electrode current collecting member 14 is omitted. In the caulking step, the coupling portion 42c of the second conductive member 42 is caulked on the negative electrode current collecting member 14.

Herein, the second conductive member 42 of the negative electrode terminal 40 is caulked on the negative electrode current collecting member 14. The cylindrical portion 42c2 protruding from the opening 14h of the negative electrode current collecting member 14 is caulked on the negative electrode current collecting member 14 such that a compression force is applied in the up-down direction Z. Herein, caulking is performed in a state where the gasket 50 is sandwiched between the negative electrode terminal 40 and the sealing plate 24 and, furthermore, the insulator 60 is sandwiched between the sealing plate 24 and the negative electrode current collecting member 14.

As illustrated in FIG. 7, in the caulking step, a caulking device including the punch (press jig) 91 and a die (support jig) 92 can be used. The punch 91 may have a shape that allows deformation of the coupling portion 42c of the second conductive member 42. Respective shapes of the punch 91 and the die 92 are set as appropriate in accordance with respective shapes of the first conductive member 41 and the second conductive member 42. In this embodiment, the punch 91 has an approximately truncated cone shape a distal end of which is narrower than an inner peripheral surface of the cylindrical portion 42c2. The die 92 may have an arrangement surface corresponding to a shape of the negative electrode terminal 40. The negative electrode terminal 40 is arranged on the die 92. Herein, in the first conductive member 41, the second surface 41b at an opposite side to a side at which the second conductive member 42 is arranged is arranged on the die 92.

Next, the distal end of the punch 91 is inserted in the coupling portion 42c (preferably, the cylindrical portion 42c2) of the second conductive member 42. A side peripheral surface of the punch 91 abuts on the cylindrical portion 42c2 and presses and extends the cylindrical portion 42c2 outwardly. The distal end of the coupling portion 42c is plastically deformed and a diameter thereof is extended. Thus, in the negative electrode terminal 40, the caulking portion 40c is formed and each member is fixed by caulking. The positive electrode terminal 30 is fixed to the opening of the sealing plate 24 by caulking in a similar manner.

As described above, as illustrated in FIG. 3, the positive electrode terminal 30 and the negative electrode terminal 40 are fixed to the sealing plate 24 by the insertion step and the caulking step. Subsequently, the electrode body 10 integrated with the sealing plate 24 by a known method is accommodated in the exterior body 22. The sealing plate 24 is joined to a peripheral edge of the opening 22h of the exterior body 22. Joining is performed by a known method (for example, laser welding). An electrolyte solution is injected through an injection hole, and the electricity storage device 100 is airtightly sealed by closing the injection hole. In the manner described above, the electricity storage device 100 can be manufactured.

Incidentally, in a case where a terminal for an electricity storage device is mounted on an electricity storage device, the terminal for an electricity storage device is inserted through a terminal mounting hole of a sealing plate and is fixed thereto by caulking. At this time, a conductive member, an electrode body, or the like are mounted on the sealing plate. In a case where the electrode body or the like is mounted on the sealing plate, in terms of workability, it is difficult to process the terminal for an electricity storage device after the terminal for an electricity storage device is fixed to the sealing plate by caulking. For example, when, as the terminal for an electricity storage device, a terminal in which conductive members are mechanically fastened to each other and metallically joined to each other is used, it is necessary that the terminal for an electricity storage device is prepared in advance. However, in a trial performed by the inventors of the present disclosure, when a terminal for an electricity storage device including multiple conductive members was prepared in advance and was fixed to a sealing plate by caulking, joining between the members that form the terminal for an electricity storage device was not preferably maintained in some cases. An event where, in fixing the terminal for an electricity storage device to the sealing plate by caulking, a portion of the terminal for an electricity storage device other than a coupling portion of the terminal for an electricity storage device was plastically deformed was confirmed.

In the negative electrode terminal 40 described above, in the first conductive member 41, the fastening portion 43 is located closer to the outer periphery than the metal joining portion 45. In the negative electrode terminal 40 having the configuration described above, the outer peripheral edge 41o of the first conductive member 41 and the outer peripheral edge 42fo of the flange portion 42f of the second conductive member 42 are set in the approximately same position in the radial direction of the flange portion 42f. In this case, for example, as compared to a form in which a first conductive member covers a periphery of a flange portion of a second conductive member, only a small amount of the first conductive member 41 relative to the second conductive member 42 is required. Thus, a deformation amount in the entire first conductive member 41 that is deformed in accordance with deformation of the coupling portion 42c of the second conductive member 42 is suppressed. As a result, a deformation amount in a portion located more inside than the fastening portion 43 in the radial direction can be suppressed to a low level. As a result, the metal joining portion 45 located more inside than the fastening portion 43 in the radial direction is likely to be maintained. Moreover, when the first conductive member 41 is deformed, the first conductive member 41 tends to be deformed along the flange portion 42f toward outside in the radial direction. Thus, the deformation amount in the position located more inside than the fastening portion 43 in the radial direction can be reduced. As a result, the metal joining portion 45 can be easily maintained and conduction reliability of the negative electrode terminal 40 can be increased.

As illustrated in FIG. 3, an insulating member (a resin member), such as the gasket 50 or the like, is preferably arranged so as to be opposed to a boundary portion between the outer peripheral edge 41o of the first conductive member 41 and the outer peripheral edge 42fo of the flange portion 42f of the second conductive member 42. The insulating member, such as the gasket 50 or the like, preferably extends from an area that contacts the sealing plate 24 to a position that is opposed to the outer peripheral edge 41o of the first conductive member 41. Thus, adhesion of water or the like to a portion extending from the first conductive member 41 to the second conductive member 42 can be suppressed. Accordingly, corrosion of the terminal can be more effectively suppressed.

It is preferable that the shape of the first conductive member 41 when viewed from top is an approximately circular shape and the shape of the flange portion 42f of the second conductive member 42 when viewed from top is preferably an approximately circular shape.

A load is likely to be applied to an area (the first area A1) of the first conductive member corresponding to the coupling portion 42c of the second conductive member 42 that is deformed. In this case, a portion located more outside than the first area A1 is likely to be deformed. Thus, the first conductive member 41 is less likely to be deformed in the second area A2 located more inside than the first area A1. As a result, the metal joining portion 45 can be easily maintained and conduction reliability of the negative electrode terminal 40 can be increased.

In this embodiment, the rib 41ri having an annular shape is formed between the first area A1 and the second area A2 in the second surface 41b of the first conductive member 41. The rib 41ri is formed outside the second area A2. The rib 41ri is formed so as to partially overlap an inner portion of the first area A1. With the rib 41ri provided, deformation of the second area A2 is likely to be suppressed. As a result, a load applied to the metal joining portion 45 is likely to be further reduced. Note that the rib 41ri may not be necessarily provided.

As for the effects described above, the effects can be increased as a thickness of the first area A1 reduces. For example, the smaller the thickness of the first area A1 is, the more suppression of deformation of the second area A2 is suppressed. When the external conductive member 48, the bus bar 90 (see FIG. 4), and the like are welded to the rib 41ri, a load applied to the metal joining portion 45 can be reduced. In view of the foregoing, the thickness of the first area A1 is preferably 1.5 mm or less, and is more preferably 0.8 mm or less.

Note that there is no particular limitation on a use form of the rib 41ri. The bus bar 90 may be welded to the rib 41ri, and the bus bar 90 may be welded in a position more outside than the rib 41ri. The external conductive member 48 may be jointed to the rib 41ri by welding. Thus, reaching of a welding portion of the external conductive member 48 and the first conductive member 41 to the second conductive member 42 can be suppressed. As a result, reliability of the welding portion can be made excellent.

From a viewpoint of suppressing deformation of the second area A2, in the first conductive member 41, the first area A1 and the second area A2 preferably have the approximately same thickness. When it is assumed that the thickness of the first area A1 is T1 and the thickness of the second area A2 is T2, 0.8 < T1/T2 < 1.2 is preferably satisfied, and 0.9 < T1/T2 < 1.1 is more preferably satisfied. The thickness of the first area A1 is particularly preferably smaller, for example, is preferably 1.5 mm or less, and is more preferably 0.8 mm or less. Moreover, when it is assumed that the thickness of the flange portion 42f of the second conductive member 42 is T3, T1/T3 is preferably 1/3 or less. With the thicknesses set to the above-described dimensions, the first conductive member 41 is likely to extend along the flange portion 42f of the second conductive member 42 to outside, and deformation of the second area A2 can be suppressed. Note that each of the thickness of the first area A1 and the thickness of the second area A2 is a thickness of a portion that does not include the rib 41ri and is also a thickness of a portion from the upper surface 42u to the bottom 41r2 of the recessed portion 41r.

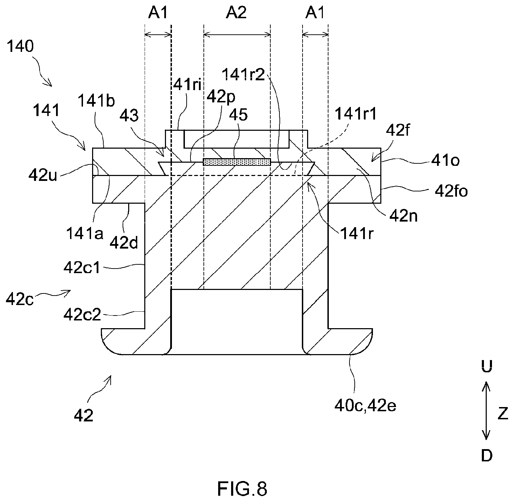

In the embodiment described above, the first area A1 and the second area A2 are within an area in which the recessed portion 41r is formed when viewed from top. However, a positional relationship between the first area A1, the second area A2, and the recessed portion 41r is not limited thereto. FIG. 8 is a cross-sectional view of a negative electrode terminal 140 according to another embodiment. In FIG. 8, each component that in common with the negative electrode terminal 40 described above is denoted by the same reference sign and detailed description thereof will be omitted. As illustrated in FIG. 8, a recessed portion 141r of a first conductive member 141 is formed in a position that overlaps the first area A1 when viewed from top. An opening 141r1 of the recessed portion 141r is provided in a position that overlaps the first area A1. In the first area A1, a first surface 141a of the first conductive member 141 has a larger thickness than that of a bottom 141r2 of the recessed portion 141r. In this case, the difference in height between an upper surface in the first area A1 and an upper surface in the second area A2 is preferably 2 mm or less.

The relationship between the thickness T1 in the first area A1 and the thickness T2 in the second area A2 described above can vary depending on the configurations of the first conductive member 41 and the second conductive member 42 (see FIG. 7). In the embodiment illustrated in FIG. 8, when it is assumed that, in the first conductive member 141, the thickness in the first area A1 (the thickness of the first conductive member 141 between the first surface 141a and a second surface 141b) is T11 and the thickness in the second area A2 (a thickness thereof between the bottom 141r2 of the recessed portion 141r and the second surface 141b) is T12, T11 > T12 is preferably satisfied, T11/T12 > 1.1 is more preferably satisfied, and T11/T12 > 1.2 is even more preferably satisfied. The thickness T11 in the first area A1 and the thickness T12 in the second area A2 have the relationship described above, so that deformation of the second area A2 can be easily suppressed, and joining of the metal joining portion 45 can be maintained.

The technology disclosed herein has been described above in various forms. However, the embodiments described above shall not limit the present disclosure, unless specifically stated otherwise. Various changes can be made to the technology described herein, and each of components and processes described herein can be omitted as appropriate or can be combined with another one or other ones of the components and the processes as appropriate, unless a particular problem occurs.

## Claims

1. An electricity storage device (100) comprising:
an electrode body (10) including a first electrode and a second electrode having a different polarity from that of the first electrode;
a case (20) that accommodates the electrode body (10);
a terminal (40) electrically coupled to the first electrode and mounted on the case (20); and
a current collecting member (14) that is arranged in the case (20) and electrically couples the first electrode and the terminal (40),
wherein
the terminal (40) includes a first conductive member (41) formed of a first metal and a second conductive member (42) formed of a second metal that is different from the first metal,
the first conductive member (41) includes a recessed portion (41r) in a first surface (41a),
a portion of the second conductive member (42) is arranged in the recessed portion (41r),
the first conductive member (41) includes a fastening portion (43) mechanically fastened to the second conductive member (42) and a metal joining portion (45) metallically joined to the second conductive member (42),
in the first conductive member (41), the fastening portion (43) is located closer to an outer periphery than the metal joining portion (45),
the second conductive member (42) includes a flange portion (42f) and a coupling portion (42c) formed on one surface (42d) of the flange portion (42f),
a distal end of the coupling portion (42c) includes a diameter extended portion (42e), the diameter extended portion (42e) being coupled to the current collecting member (14),
a portion (42p) of the flange portion (42f) is arranged in the recessed portion (41r), and
an outer peripheral edge (41o) of the first conductive member (41) and an outer peripheral edge (42fo) of the flange portion (42f) are located in an approximately same position in a radial direction of the flange portion (42f).

2. The electricity storage device (100) according to claim 1, wherein
the first conductive member (41) includes a first area (A1) that overlaps the diameter extended portion (42e) and a second area (A2) located more inside than the first area (A1), when viewed in a direction in which the coupling portion (42c) extends, and
the metal joining portion (45) is formed in the second area (A2).

3. The electricity storage device (100) according to claim 2, wherein
an annular rib (41ri) is formed between the first area (A1) and the second area (A2).

4. The electricity storage device (100) according to claim 3, further comprising:
an external conductive member (48),
wherein
the external conductive member (48) is joined to the annual rib (41ri) by welding.

5. The electricity storage device (100) according to any one of claims 2 to 4, wherein
when it is assumed that a thickness of the first area (A1) is T1 and a thickness of the second area (A2) is T2, 0.8 < T1/T2 < 1.2 is satisfied.

6. A terminal (40) for an electricity storage device (100), comprising:
a first conductive member (41) formed of a first metal; and
a second conductive member (42) formed of a second metal that is different from the first metal,
wherein
the first conductive member (41) includes a recessed portion (41r) in a first surface (41a),
a portion of the second conductive member (42) is arranged in the recessed portion (41r),
the first conductive member (41) includes a fastening portion (43) mechanically fastened to the second conductive member (42) and a metal joining portion (45) metallically joined to the second conductive member (42),
in the first conductive member (41), the fastening portion (43) is located closer to an outer periphery than the metal joining portion (45),
the second conductive member (42) includes a flange portion (42f) and a coupling portion (42c) formed on one surface (42d) of the flange portion (42f),
a distal end of the coupling portion (42c) includes a diameter extended portion (42e),
a portion (42p) of the flange portion (42f) is arranged in the recessed portion (41r), and
an outer peripheral edge (41o) of the first conductive member (41) and an outer peripheral edge (42fo) of the flange portion (42f) are located in an approximately same position in a radial direction of the flange portion (42f).

7. A method for manufacturing an electricity storage device (100),
the electricity storage device (100) including
an electrode body (10) including a first electrode and a second electrode
having a different polarity from that of the first electrode,
a case (20) that accommodates the electrode body (10),
a terminal (40) electrically coupled to the first electrode and mounted on the case (20), and
a current collecting member (14) that is arranged in the case (20) and electrically couples the first electrode and the terminal (40),
the terminal (40) including
a first conductive member (41) formed of a first metal, and a second conductive member (42) formed of a second metal that is different from the first metal,
the first conductive member (41) including a recessed portion (41r) in a first surface (41a),
a portion of the second conductive member (42) being arranged in the recessed portion (41r),
the first conductive member (41) including a fastening portion (43) mechanically fastened to the second conductive member (42) and a metal joining portion (45) metallically joined to the second conductive member (42),
in the first conductive member (41), the fastening portion (43) being located closer to an outer periphery than the metal joining portion (45),
the second conductive member (42) including a flange portion (42f) and a coupling portion (42c) formed on one surface (42d) of the flange portion (42f),
a distal end of the coupling portion (42c) including a diameter extended portion (42e),
the diameter extended portion (42e) being coupled to the current collecting member (14),
a portion (42p) of the flange portion (42f) being arranged in the recessed portion (41r),
an outer peripheral edge (41o) of the first conductive member (41) and an outer peripheral edge (42fo) of the flange portion (42f) being located in an approximately same position in a radial direction of the flange portion (42f),
the method comprising:
an insertion step of inserting the coupling portion (42c) of the second conductive member (42) in an opening of the current collecting member (14); and
a caulking step of, after the insertion step, caulking the coupling portion (42c) on the current collecting member (14).
